# EUROPÄISCHE PATENTANMELDUNG

(11) **EP 0 752 276 A1**
(43) Veröffentlichungstag der Anmeldung: **08.01.1997**
(21) Anmeldenummer: 95810734.4
(22) Anmeldetag: 24.11.1995
(51) Int. Cl.: B03B 9/06, B09B 3/00, C22B 43/00, H01J 9/00

(54) **Verfahren sowie eine Anlage zum Entsorgen von quecksilberhaltigen Gegenständen**

(30) Priorität: 05.07.1995 CH 1958/95
(71) Anmelder: ENVIRO EC AG, CH-6300 Zug (CH)
(72) Erfinder: Alavi, Kamal, CH-6318 Walchwil (CH)
(74) Vertreter: Luchs, Willi

(57) **Zusammenfassung**

Bei einem Verfahren zum Entsorgen von quecksilberhaltigen Gegenständen, vorzugsweise von Lampen, werden letztere in einem annähernd geschlossenen System entsorgt, bei dem sie
- unter Abschluss der Aussenluft in eine Brechvorrichtung (66) eingeführt und darin zerkleinert werden.
- in zerkleinertem Zustand weiterbefördert und zumindest das Pulver und die Dämpfe, welche Quecksilber enthalten, durch einen als Durchlaufofen (85) ausgebildeten Ofen mit einer Innentemperatur zwischen 400^{o} und 600^{o} Celsius hindurchgeführt werden,
- parallel zur Beförderung der zerbrochenen Gegenstände das gasförmige Medium durch den Durchlaufofen (85) und nach diesem in einen Kondensator (81) zwecks Abscheidung des Quecksilbers geführt wird.

Die zerkleinerten Gegenstände werden in einer Trommel (70) von dem mit Quecksilber vermischten Pulver getrennt, und letzteres wird in dem mit einer drehenden Trommel versehenen Durchlaufofen (85) umgewälzt und es passiert dabei den Durchlaufofen (85) in einer Zeit zwischen 3 und 10 Minuten. Hernach wird das in diesem verdampfte Quecksilber in einen Kondensator (81) zur Destillation desselben geführt. Dieses Verfahren ermöglicht damit eine nahezu vollständige Aufgliederung der zerkleinerten Gegenstände, welche dann zurückgewonnen und wiederverwendet werden können.

## Beschreibung

Die Erfindung betrifft ein Verfahren zum Entsorgen von quecksilberhaltigen Gegenständen, vorzugsweise von Leuchtstoffröhren, bei dem die Gegenstände zerkleinert, nachfolgend in zerkleinertem Zustand in einen Ofen befördert und darin erhitzt werden, dabei ein im Ofen das verdampfende Quecksilber aufnehmende gasförmige Medium in einen Kondensator geführt wird und in letzterem dieses Quecksilber ausgeschieden wird; sowie eine Anlage zur Durchführung des Verfahrens.

Bei einem bekannten Verfahren nach der eingangs erwähnten Gattung gemäss der Patenschrift DE-C1 36 09 517 werden die festen Körper, beispielsweise Leuchtstofflampen, Batterien, Thermometer etc., in einem stationären Ofen chargenweise erhitzt, wodurch sich das Quecksilber verdampft und im Ofenraum ein angereichertes Gas bildet. Dieser Quecksilberdampf wird in der Folge in eine Kondensatoreinrichtung geleitet und das darin von dem kondensierten Quecksilber befreite Gas wird dann in einem geschlossenen Kreislauf zur Spülung des Einsatzmaterials in den Ofenraum zurückgeführt. Bei diesem an sich stationären Ofen besteht ein erheblicher Nachteil darin, dass dieser stark erhitzt werden muss, um das Quecksilber aus den aufgeschichteten festen Körpern auszuscheiden. Es ist insbesondere damit zu rechnen, dass das Quecksilber in der untersten Schicht dieses zu entsorgenden Materials ungenügend entfernt werden kann. Auch mit der vorgesehenen Spülung des Einsatzmateriales mittels dem zurückgeführten Gas kann diese unzureichende Abführung des Quecksilbers nur sehr schwerlich verbessert werden. Im übrigen muss für diese Spülung nebst dein Aufheizen während 12 bis 14 Stunden zusätzliche Energie zugeführt werden, infolgedessen dieses Recycling-Verfahren insgesamt teuer und unwirtschaftlich ist. Daraus ergibt sich ein weiteres Problem insofern, als das zu entsorgende Gut nach der Entfernung aus dem Ofen noch heiss ist und infolgedessen Restbestände von Quecksilber verdampfen und im Freien ausscheiden.

Bei einem weiteren gattungsmässigen Verfahren nach der EP-A1 0 420 367 werden die zu entsorgenden Lampen in eine Zerkleinerungsvorrichtung, beispielsweise einen Shredder oder dergleichen eingeführt und darin zerkleinert. Darauffolgend werden die Lampenteile in eine Siebmaschine überführt und dort in drei Fraktionen aufgeteilt. Die Fraktion mit den kleinsten zerkleinerten Teilen wird dann in einen Ofen transportiert, darin bis zu 16 Stunden aufgeheizt und auf diesem Wege das Quecksilber wiederum verdampft und in einen Kondensator zur Ausscheidung desselben geleitet. Die verbleibende Luft wird dabei wieder in den Ofen zurückgeführt. Nachteilig bei diesem wie auch bei dem obei, diskutierten Verfahren ist die Tatsache, dass Quecksilber bereits nach dem Bruch der Leuchtstofflampen verdampfen und in die Umgebungsluft entweichen kann. Es wird dabei mit Unterdruck gearbeitet, was mit zusätzlichen Aufwendungen für die Erzeugung dieses Unterdruckes verbunden ist. Zudem ist bei der beschriebenen Unterteilung in verschiedene Fraktionen davon auszugehen, dass sich das Quecksilber nicht ausschliesslich in der dritten Fraktion mit den kleinsten Teilen befindet, sondern, dass es genausogut auch in der ersten und zweiten Fraktion enthalten sein kann. Dies führt zu einer ungenügenden Ausbringung des Quecksilbers aus den zerkleinerten Materialien und es fällt daher zuviel Sondermüll an.

Demgegenüber besteht die Aufgabe der vorliegenden Erfindung darin, ein Verfahren und eine Anlage nach der eingangs beschriebenen Gattung zu schaffen, mittels dem eine nahezu vollständige Ausbringung des Quecksilbers aus den zu entsorgenden Gegenständen und dabei ein kostengünstiger, leistungsstarker sowie einwandfreier Betrieb der Anlage ermöglicht ist.

Erfindungsgemäss ist die Aufgabe dadurch gelöst, dass die Gegenstände in einem annähernd geschlossenen System entsorgt werden, bei dem sie
- unter Abschluss der Aussenluft in eine Brechvorrichtung eingeführt und darin zerkleinert werden,
- in zerkleinertem Zustand von dieser Brechvorrichtung weiterbefördert und zumindest das Pulver und die Dämpfe, welche Quecksilber enthalten, durch einen vorzugsweise als Durchlaufofen ausgebildeten Ofen mit einer Innentemperatur zwischen 400^{o} und 600^{o} Celsius hindurchgeführt werden,
- parallel zur Beförderung der zerbrochenen Gegenstände das gasförmige Medium durch den Durchlaufofen (15) und nach diesem in einen Kondensator (20) zwecks Abscheidung des Quecksilbers geführt wird, und
- nachfolgend die vom Quecksilber befreiten zerkleinerten Gegenstände weiterverarbeitet werden.

Mit diesem erfindungsgemässen Verfahren ist gegenüber all den bekannten Verfahren eine bedeutend höhere Gewährleistung von einem gesicherten Abscheiden des gesamten Quecksilbers in den zu entsorgenden Gegenständen gegeben, ohne dass dabei dieses Verfahren mit einem Mehraufwand betrieben werden müsste.

Im weiteren ist mit diesem Verfahren nebst der Quecksilberentsorgung eine annähernd hundertprozentige Aufgliederung der zerkleinerten Gegenstände in Metallbestandteile, Leuchtstoff, Glas, Aluminium und in andere Stoffe sichergestellt. Demzufolge können diese einzelnen Bestandteile zurückgewonnen und wiederverwendet werden.

Die erfindungsgemässe Anlage zeichnet sich durch einen einfachen Aufbau und einen nicht störanfälligen, sicheren und annähernd kontinuierlich arbeitenden Betrieb aus, was mit einer maximalen Leistungsfähigkeit dieser Anlage verbunden ist.

Ausführungsbeispiele der Erfindung sowie weitere Vorteile derselben sind nachfolgend anhand der Zeichnung näher erläutert. Es zeigt:
- Fig.1: eine schematische Darstellung des erfindungsgemässen Verfahrensablaufs beziehungsweise der Anlage,
- Fig.2: eine schematisch dargestellte Brechvorrichtung der Anlage nach Fig.1 im Längsschnitt,
- Fig.3: die Brechvorrichtung nach Fig.2 im Querschnitt,
- Fig.4: einen Längsschnitt durch einen schematisch gezeigten Container,
- Fig.5: einen Querschnitt des Containers nach Fig.4 und
- Fig.6: eine schematische Darstellung eines weiteren erfindungsgemässen Verfahrensablaufs bzw. einer Anlage.

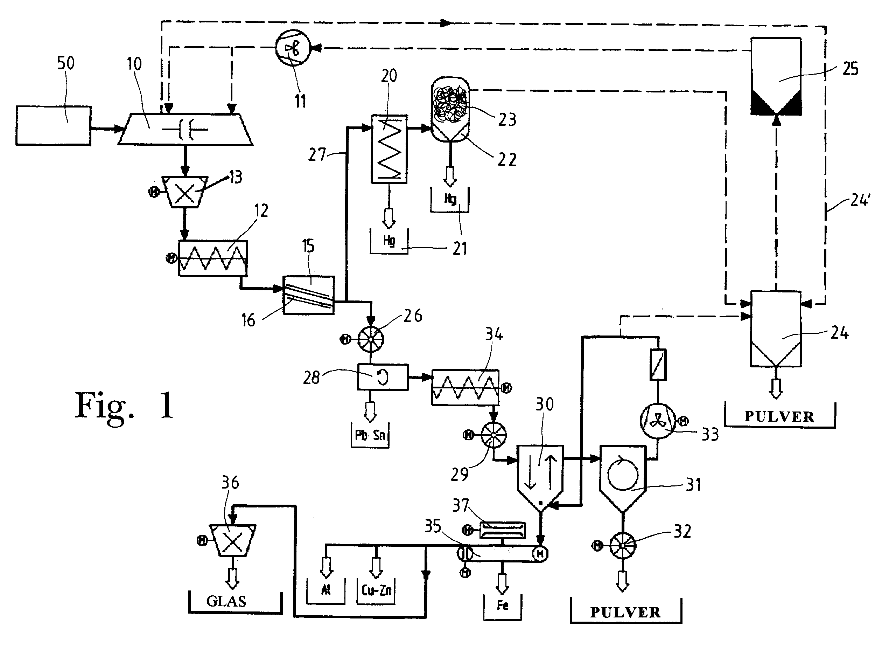

Fig.1 zeigt eine Ausführung der Anlage bzw. des Verfahrensablaufs der Entsorgung von als quecksilberhaltige Gegenstände ausgebildeten Leuchtstoffröhren, HID-Lampen oder andere Arten von Leuchtstofflampen.

Bei diesem erfindungsgemässen Verfahren werden die Gegenstände in einem annähernd geschlossenen System entsorgt. Als erstes werden diese Gegenstände dabei unter Abschluss der Aussenluft in eine Brechvorrichtung 10 eingeschoben und darin zerkleinert. Hernach werden diese mittels eines weiteren Shredders 13 noch weiter zerkleinert, vourzugsweise bis die Bruchstücke einen Durchmesser von höchstens ein paar Zentimetern (3 bis 5 Zentimetern) aufweisen. Die Ausgestaltung der Brechvorrichtung 10 ist nachstehend ausführlich erläutert. In dem zerkleinerten Zustand werden die Gegenstände in einen als Durchlaufofen 15 ausgebildeten Ofen mit einer Innentemperatur vorteilhaft zwischen 500^{o} und 550^{o} geleitet und hindurchgeführt. Dadurch werden diese zerstückelten Gegenstände und mit diesen das darin befindliche gasförmige Medium erhitzt, womit das unter den Fraktionen befindliche Quecksilber verdampft und sich mit dem Medium vermischt. Letzteres, bei dem es sich beispielsweise um Luft handelt, wird bei Atmosphärendruck in den Durchlaufofen 15 und nach diesem in einen Kondensator 20 zwecks Abscheidung des darin wieder verflüssigten Quecksilbers geführt. In der Folge wird das Medium in dem geschlossenen Kreislauf wieder zurück vor den Durchlaufofen 15, im vorliegenden Ausführungsbeispiel in die Brechvorrichtung 10, zurückgeführt.

Vorteilhaft werden die zerkleinerten Gegenstände im Durchlaufofen zwecks Vermischung mit dem gasförmigen Medium umgewälzt. Dazu ist der Durchlaufofen 15 mit wenigstens einer sich drehenden, um einige Winkelgrade geneigten Trommel 16 versehen, mittels der sich eine schnelle Vermischung des umgewälzten Materials mit dem gasförmigen Medium ergibt. Durch die etwas geneigte Anordnung der Drehachse der Trommel 16 wird das Entsorgungsgut durch die Schwerkraft vorwärtsbewegt. In einer festlegbaren Durchlaufzeit von 3 bis 30 Minuten ist gewährleistet, dass das Quecksilber nahezu restlos verdampft, sich vom zerstückelten Material löst und in das Medium gelangt.

Der Durchlaufofen 15 wird über eine zwischen diesem und der Brechvorrichtung 10 angeordneten Förderschnecke 12 mit zerkleinerten Gegenständen beschickt, wobei die zugeführte Menge pro Zeiteinheit durch Veränderung der Drehzahl der Förderschnecke gesteuert werden kann. Die jeweilige Durchlaufgeschwindigkeit der zerkleinerten Gegenstände und des gasförmigen Mediums sind derart gewählt und aufeinander abgestimmt, dass sich ein hoher, zwischen 70 und nahezu 100prozentiger Sättigungsgrad des Mediums mit verdampftem Quecksilber und damit ein optimal wirkender Entsorgungsbetrieb einstellt. Der Druck innerhalb des Durchlaufofens entspricht annähernd dem Atmosphärendruck. Es könnte jedoch auch ein Unterdruck oder ein leichter Überdruck des gasförmigen Mediums im System eingestellt sein.

Nach dem Durchlaufofen 15 wird das gasförmige Medium in den Kondensator 20 geführt und in diesem das dampfförmige Quecksilber auf herkömmliche Art verflüssigt und in einem Sammelbehälter 21 aufgefangen. In der Folge wird das Medium durch einen Metallfilter 22 geleitet, welcher mit Gold beschichtetem Eisenschwamm 23 (Stahlwolle) gefüllt ist. Allfällige Rückstände von Quecksilber, die sich im Kondensator 20 nicht vom Gas getrennt haben, reagieren mit dem Gold sehr schnell und es sind somit annähernd sämtliche Quecksilberrückstände abgeschieden und in reines Quecksilber verwandelt worden, das in den Sammelbehältern 21 aufgenommen wird.

Das vom Quecksilber befreite Gas wird anschließend vorzugsweise noch durch einen normalen Filter 24 und einen Aktivkohlenfilter 25 und dann zurück in die Brechvorrichtung 10 geleitet. Für die Zirkulation des Gases ist ein Ventilator 11 eingebaut, der im vorliegenden Ausführungsbeispiel vor der Brechvorrichtung 10, jedoch auch anderswo angeordnet ist bzw. sein könnte; denkbar wäre auch, dass mehrere solcher vorgesehen sein könnten. Wenn die Brechvorrichtung 10 entleert werden soll, kann das in ihr befindliche Restpulver über eine Leitung 24' zum Filter 24 abgesaugt werden.

Die vom Quecksilber befreiten zerkleinerten Gegenstände werden dann quasi kontinuierlich weiterverarbeitet. Nach dem Durchlaufofen 15 und einer Schleuse 26, insbesondere eine Zellschleuse, werden sie durch eine Zentrifuge 28 befördert, in welcher Blei und gegebenenfalls weitere metallische Bestandteile, wie Zink, ausgesondert werden. Mit der Schleuse 26 ist gewährleistet, dass die zerkleinerten Gegenstände von dem gasförmigen Medium und dem Quecksilberdampf getrennt werden, d.h. das quecksilberhaltige Gas geht ausschliesslich durch eine vor dieser Schleuse 26 abzweigende Leitung 27 in den Kondensator 20. Es ist damit das angestrebte geschlossene System wenigstens bis zu dieser Schleuse 26 gegeben. Sobald gesichert ist, dass kein Quecksilber mehr im Entsorgungsgut enthalten ist, wie dies nach der Schleuse 26 der Fall ist, muss dieses geschlossene System nicht mehr zwangsweise aufrechterhalten werden. Mit der an sich auf herkömmliche Weise funktionierenden Zentrifuge 28 werden insbesondere die Schwermetalle, wie Blei und Zink, ausgeschieden. Diese Zentrifuge 28 weist dabei eine das Entsorgungsgut enthaltende Trommel auf, die bei einer solchen Drehzahl dreht, dass die Schwermetalle nicht an deren Aussenwand geschleudert werden, wohl aber die übrigen Bestandteile, womit sich Blei und Zink vom übrigen Brechmaterial trennen lässt.

Danach werden die Gegenstände mittels einer weiteren Förderschnecke 34 durch eine Schleuse 29 und durch einen Windsichter 30 geleitet, aus welchem der Leuchtstoff ausgeschieden und in einem Zyklon 31 zu reinem Pulver verarbeitet wird. Wiederum gewährleistet eine am Zyklon 31 vorgesehene Schleuse 32, dass dieser Zyklon von der Aussenluft abgetrennt bleibt. Das Entsorgungsgut wird nach dem Windsichter 30 und einer Rückführungspumpe 33 in letzteren zu einem Aluminiumabscheider weiterbefördert, mittels welchem das sandförmige Glas vom Aluminium getrennt wird und ferner Eisenlegierungen wie auch Messing separiert werden. Die Glassplitter werden vorteilhaft in einer als Hammermühle vorgesehenen Brechvorrichtung 36 zu Glassand zerkleinert.

Fernerhin wird wenigstens die Quecksilberkonzentration im gasförmigen Medium vor und nach der der Filtrierung gemessen und zu Überwachungszwecken genutzt. Dies geschieht mittels eines an sich bekannten Spektralmeters, mit dem auch noch andere Grössen messbar sind.

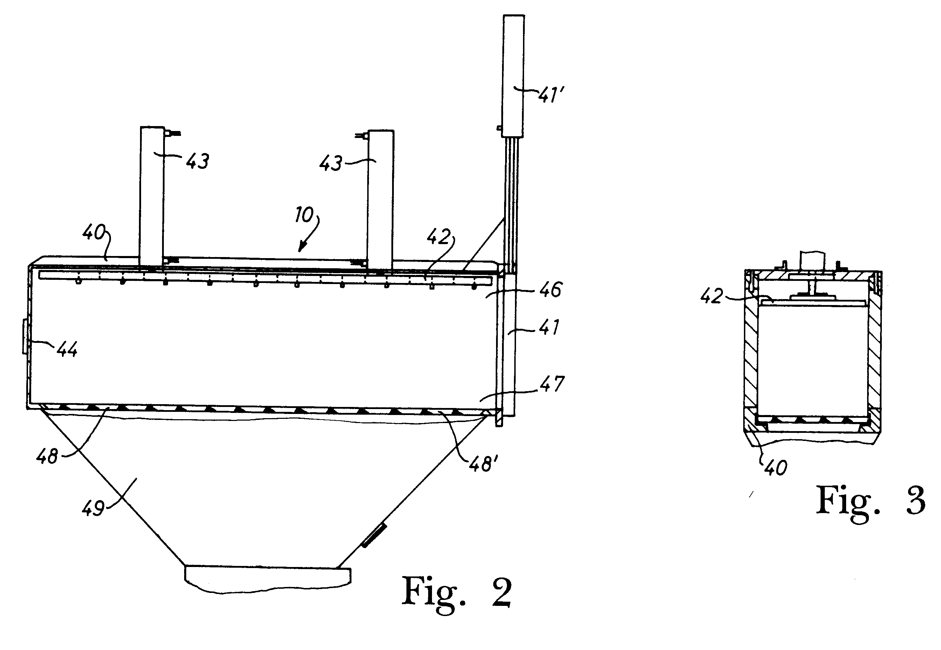

Gemäss Fig.2 und Fig.3 weist die Brechvorrichtung 10 ein rechteckiges Gehäuse 40 auf, in welchem wenigstens eine gitterförmige Brechbacke 42 mittels angedeuteten Verstellzylindern 43 höhenverstellbar geführt ist. wobei sich diese Brechbacke 42 annähernd über den Innenquerschnitt des Gehäuses 40 erstreckt und darin von der Ober- 46 bis zur Unterseite 47 bewegt werden kann. Die Unterseite 47 des Gehäuses 40 ist durch ein Gitter 48 gebildet, durch welches das zerbrochene Material hindurchfällt und mit ihm erreicht wird, dass die einzelnen zerbrochenen Stücke nicht grösser als die Gitteröffnungen 48' sind. Anschliessend fallen diese in einen Trichter 49 und ausgehend von diesem werden sie nochmals zerkleinert oder direkt in den Durchlaufofen 10 befördert. Auf der einen Schmalseite des Gehäuses 40 ist ein mittels eines Zylinders 41' in Offen- bzw. in Schliessstellung verschiebbarer Deckel 41 angeordnet. Mit diesem kann in Offenstellung ein nachfolgend beschriebener Container angeschlossen und Entsorgungsgut in die Brechvorrichtung 10 beschickt werden. Auf der gegenüberliegenden Schmalseite des Gehäuses 40 ist eine weitere verschliessbare Öffnung 44 angeordnet, in welche beim Beschicken der Brechvorrichtung eine Schubstange durchführbar ist und/oder eine Vakuumpumpe anschliessbar ist.

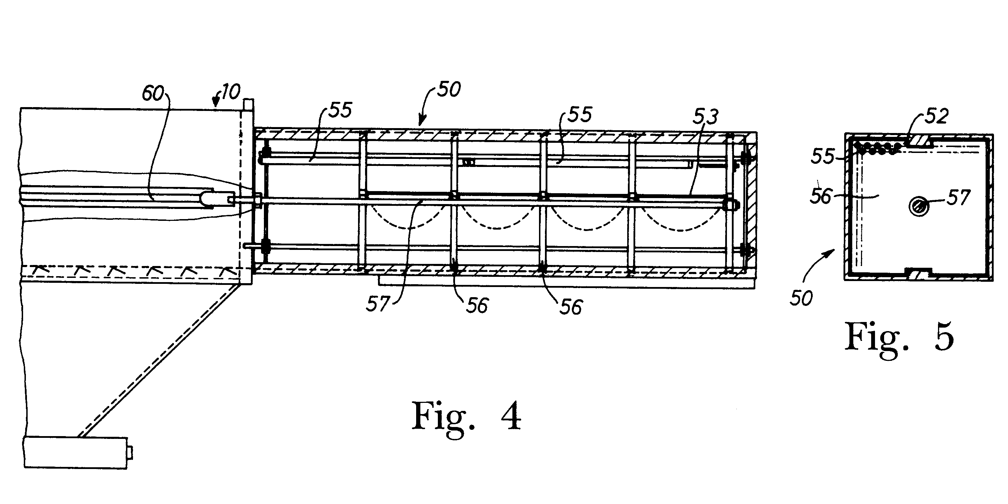

Fig.4 zeigt in teilweiser Ansicht die Brechvorrichtung 10 beim Beschicken mit Gegenständen aus einem neuartigen Container 50, in den defekte, für die Entsorgung gesammelte Leuchtstoffröhren 55 eingelegt sind. Diese Röhren 55 werden in Richtung ihrer Längserstreckung aus dem Container in die Vorrichtung 10 verschoben. Die Schieberelemente 56, in welchen die Röhren 55 liegen, werden dabei nacheinander von einer Stange 57 gegen die Brechvorrichtung 10 hin gezogen. Diese Stange 57 wird von einer sich durch die Vorrichtung 10 und durch die Öffnung 44 von letzterer erstreckenden und mit ihr gekoppelten Kolbenstange 60 einer Kolben/Zylinder-Einheit bewegt. Für das Zurückziehen der Schieberelemente 56 in die dargestellte Ausgangsstellung sind diese über Seile 53 oder dergleichen miteinander verbunden. Bei diesem Beschicken der Vorrichtung muss sichergestellt sein, dass dieses oben erläuterte Prozedre unter Abschluss der Aussenluft ausgeführt wird, um auch hierbei zu gewährleisten, dass kein Quecksilberdampf in die Umgebungsluft austritt.

Der Sammel-Container 50 weist gemäss der Fig.5 einen fächerartigen Aufbau mit einer Vielzahl von horizontal ausgerichteten Löchern 52, in die die Leuchtstoffröhren 55 eingeschoben werden können. Mit dieser Anordnung des Containers 50 wird erreicht, dass die Leuchtstoffröhren 55 nicht vorzeitig brechen und somit verhindert ist, dass bereits beim Sammeln und Transportieren Quecksilberdämpfe aufgrund von brechenden Röhren in die Umgebung entweichen können.

Im weiteren ist dieser beispielsweise 250 Röhren fassende Container 50 derart ausgebildet, dass er stets geschlossen ist und nur beim Einschieben von Röhren 55 kurz geöffnet wird. In ihm ist daher auch ein nicht näher gezeigter Aktivkohlenfilter mit einem Ventilator angeordnet, von dem Quecksilberdämpfe von allfällig gebrochenen Röhren absorbiert werden. Ein solcher Container kann an eine übliche Sammelstelle hingestellt werden.

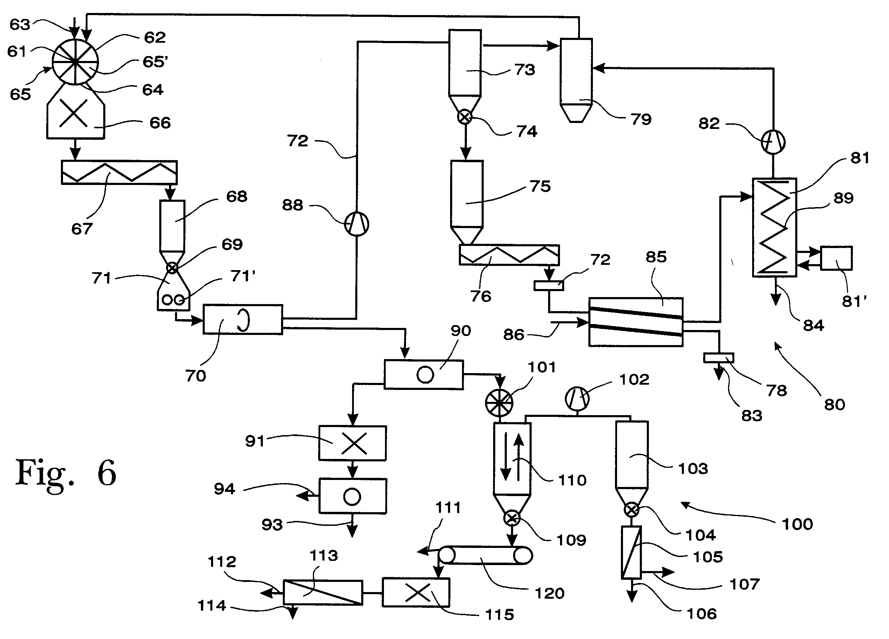

Fig.6 zeigt eine erfindungsgemässe Anlage in einer Variante, bei welcher der Hauptunterschied gegenüber derjenigen nach Fig.1 darin besteht, dass nicht die zerstückelten Gegenstände der zu entsorgenden Lampen insgesamt, sondern nur das Pulver und das zirkulierende Gas, in welchen Quecksilber enthalten ist, den Durchlaufofen passieren. Damit entsteht ein erheblicher Vorteil, als nicht die gesamten Lampen, sondern lediglich das effektiv mit dem Quecksilber versehene Pulver sowie das Gas erhitzt werden muss.

Diese Anlage weist eingangs eine Zellenschleuse 65 auf, in welche die Lampen vorteilhaft in ganzem oder aber in zerbrochenem Zustand eingefüllt werden. Diese Zellenschleuse 65 besteht im wesentlichen aus einem die segmentförmigen Zellen 65' bildenden Rotor 61, einem diesen abdichtend umgebenden Gehäuse 62, einem obenliegenden Einlass 63 und einem gegenüberliegenden unteren Auslass 64. Zudem ist in diesen Zellen ein Unterdruck erzeugt, damit die beim Einfüllen des Entsorgungsgutes entstehenden Quecksilberdämpfe nicht ins Freie ausströmen können. Das in eine jeweilige Zelle 65' geleerte Gut wird durch Drehung des Rotors 61 bis zum untenliegenden Auslass 64 geführt und dort in einen an letzterem dicht anschliessenden, auf herkömmliche Weise und daher nicht im Detail beschriebenen Shredder 66 eingefüllt, welcher die Lampen oder dergleichen zerkleinert und über eine daran folgende Förderschnecke 67 in ein Silo 68 leitet. Von diesem aus wird das zerstückelte Gut wiederum mittels einer dosierenden Schleuse 69 in ein Reinigungsgefäss 71 hineingeleert, in welchem drehende Bürsten 71' mit horizontaler Drehachse angeordnet sind, welche die zerbrochenen Gegenstände, wie Glasscherben oder Metallkappen, von dem in diesen befindlichen Pulver mittels dieser Bürsten säubern. In einer nachfolgenden Trommel 70 wird durch ihre Drehung dieses Pulver von den festen Gegenständen im Durchlaufverfahren getrennt, wobei das Pulver mittels eines Abzuggebläses 88 abgesogen und in einen Filter 73 einer das Quecksilber abscheidenden Einrichtung 80 transportiert wird. Anstelle einer solchen Trommel 70 könnte beispielsweise auch ein auf herkömmliche Weise hergestelltes Trommelsieb 70 verwendet werden, in welchem ein sich drehendes zylindrisches Sieb angeordnet ist, in dieses das gesamte Entsorgungsmaterial hineingeleert wird und sich das pulverförmige Material durch die Sieblochung in einen zwischen diesem sowie einer Aussenwandung der Trommel gebildeten Auffangraum begeben und von dort aus zusammen mit dein quecksilberhaltigen Gas abgesaugt werden, währenddem die vom Pulver gesäuberten festen Gegenstände aus dem Sieb zu einem Magnetabscheider 90 geführt werden.

Dieses das Quecksilber enthaltende Pulver sowie die Dämpfe gelangen ausschliesslich über eine Leitung 72 in einen Filter 73 und über eine weitere Schleuse 74 in ein Silo 75 der Einrchtung 80. Mittels einer Förderschnecke 76 und einem nachfolgenden Verschlussventil 72 wird dieses Pulver chargenweise in den Durchlaufofen 85 geleitet. Letzterer wird zwecks besserer Ausbringung des Quecksilbers parallel noch mit Stickstoff 86 beschickt. Das in diesen Ofen gelangende quecksilberhaltige Pulver wird erhitzt, bis das Quecksilber verdampft. Letzteres wird in der Folge in ein Destilliergerät 81 überführt, darin verflüssigt und unten am Ausgang 84 in einem Sammelbehälter aufgefangen. Das Destilliergerät 81 ist auf bekannte Weise hergestellt und es ist daher nicht mehr in jeder Einzelheit beschrieben. Es weist jedenfalls eine Kühlschlange 89 mit einem darin zirkulierenden, von einem Gerät 81' gespiesenen Kühlmedium auf, mittels dein der in das Gerät gelangende Quecksilberdampf kondensiert. Der Restdampf wird über ein Gebläse 82 in einen Aktivkohlenfilter 79 oder dergleichen und nachfolgend zurück zum Einlass der Zellenschleuse 62 geführt. Der genannte Filter 79 ist im übrigen noch mit dem nach der Trommel 70 vorgsehenen Filter 73 verbunden. Das vom Durchlaufofen 85 zudem ausgeschiedene, vom Quecksilber getrennte Pulver 83 wird nach Öffnung eines weiteren Verschlussventils 78 separiert, wobei letzteres nur dann geöffnet wird, wenn sich keine Charge im Durchlaufofen 85 befindet, damit nicht Quecksilber entweichen kann.

Die mit dieser Anlage entsorgten Gegenstände sind erfindungsgemäss wiederum in einem annähernd geschlossenen System entsorgt. Es ist damit gewährleistet, dass dieses Quecksilber und auch die übrigen zu entsorgenden Materialien in einem hohen Grade (99%) separiert werden.

Es sei hierbei noch erwähnt, dass die Vorsehung des Silos 75 in den Recycling-Prozess zu einem weiteren Vorteil führt, denn der Durchlaufofen 85 muss dadurch nicht dauernd, sondern erst zu dem Zeitpunkt auf die Betriebstemperatur von beispielsweise 500 Grad Celsius erhitzt werden, wenn dieses Silo 75 nahezu voll ist. Sobald dieses geleert und verarbeitet worden ist, kann der Ofen wieder abgeschaltet werden, denn es ist anzunehmen, dass die darin gelagerten Quecksilberstäube im Vergleich zum übrigen zu entsorgenden Gut in relativ geringen Mengen anfällt.

Die mittels der Trommel 70 vom Quecksilber getrennten festen Gegenstände, Glasscherben, Metallkappen und anderes, werden zu einer Einrichtung 100 geleitet und dort in die einzelnen Bestandteile zerlegt. Diese Einrichtung 100 weist eingangs einen Magnetabscheider 90 auf, bei welchem die magnetischen Metallteile vom übrigen Material getrennt und durch einen Shredder 91 nochmals zerkleinert werden. Letzterer bewirkt dabei, dass die den metallischen Gegenständen anhaftenden Glasteile komplett entfernt und dementsprechend diese Gegenstände von einem nachfolgenden Magnetabscheider in die Eisen enthaltenden Teile 93 und in Glasscherben 94 unterteilt werden.

Die nicht magnetischen Bestandteile werden vom Magnetabscheider 90 dieser Einrichtung 100 über eine Schleuse 101 in einen die restlichen Bestandteile weiterverarbeitenden Windsichter 110 geleitet, in welchem insbesondere Pulver und leichte Materialien, wie Karton oder Papier, mittels eines Absauggebläses 102 abgesaugt und über einen Zyklon 103, einen nachfolgenden Verschluss 104 und über ein Sieb 105 in Pulver 107 und Leichtmaterial 106, wie Papier, unterteilt werden. Das schwerere Restmaterial wird nach Öffnung eines Verschlusses 109 vom Windsichter 110 auf einen Aluminiumabscheider 120 gebracht, welcher die Aluminiumbestandteile 111 separiert und die übrigen in einen weiteren Shredder 115 und von diesem in ein Sieb 113, das Plastikteile 114 vom Glaspulver 115 teilt, geleitet.

Diese Anlage setzt sich vorzugsweise aus drei je eine Maschine bildende Einheiten zusammen. Die erste Einheit dient zur Zerkleinerung der Lampen und in ihr ist darüberhinaus die Trommel 70 integriert. Die zweite Einheit umfasst die Einrichtung 80, bei der das Quecksilber sowie Pulver ausgeschieden wird, währenddessen die dritte Einheit die übrigen Lampenbestandteile aussortiert.

Im Prinip könnte der Container 50 auch in einem bestimmten Winkel zur Horizontalen an die Brechvorrichtung 10 angeflanscht werden, sodass die Leuchtstoffröhren beim Öffnen von letzterer von selbst hin einfallen.

Selbstverständlich könnte zur Leistungssteigerung der Anlage mehrere Durchlauföfen und/oder mehrere Brechvorrichtungen 10 nebeneinander angeordnet sein.

Das geschlossene System der Entsorgung könnte auch dadurch erzielt werden, dass das gasförmige Medium nicht oder nur beschränkt in einem geschlossenen Kreislauf zurückgeführt würde, sondern stets frische Luft zugeführt und nach der Filtrierung entsprechend Luft durch ein Rückschlagventil oder dergleichen weggelassen würde.

Mit diesem erfindungsgemässen Verfahren, der dazugehörigen Anlage wie auch des speziellen Containers lassen sich die damit entsorgten Gegenstände in ihre einzelnen Bestandteile zerlegen, ohne dass die Anlage oder der Betrieb derselben aufwendiger und teurer würde. Es ist damit ein dem Umweltschutz vollauf Rechnung tragendes Recylingverfahren zur Verfügung gestellt, mit welchem praktisch kein Sondermüll anfällt.

## Patentansprüche

1. Verfahren zum Entsorgen von quecksilberhaltigen Gegenständen, vorzugsweise von Leuchtstoffröhren, bei dem die Gegenstände zerkleinert, nachfolgend in zerkleinertem Zustand in einen Ofen befördert und darin erhitzt werden, dabei ein im Ofen das verdampfende Quecksilber aufnehmende gasförmige Medium in einen Kondensator geführt wird und in letzterem dieses Quecksilber ausgeschieden wird, dadurch gekennzeichnet, dass die Gegenstände in einem annähernd geschlossenen System entsorgt werden, bei dem sie
• unter Abschluss der Aussenluft in eine Brechvorrichtung (10,66) eingeführt und darin zerkleinert werden,
• in zerkleinertem Zustand von dieser Brechvorrichtung (10,66) weiterbefördert und zumindest das Pulver und die Dämpfe, welche Quecksilber enthalten, durch einen vorzugsweise als Durchlaufofen (15,85) ausgebildeten Ofen mit einer Innentemperatur zwischen 400^{o} und 600^{o} Celsius hindurchgeführt werden,
• parallel zur Beförderung der zerbrochenen Gegenstände das gasförmige Medium durch den Durchlaufofen (15,85) und nach diesem in einen Kondensator (20,81) zwecks Abscheidung des Quecksilbers geführt wird, und
• nachfolgend die vom Quecksilber befreiten zerkleinerten Gegenstände weiterverarbeitet werden.

2. Verfahren nach Anspruch 1, dadurch gekennzeichnet, dass die zerkleinerten Gegenstände in dem mit einer sich drehenden Trommel (16,85) versehenen Durchlaufofen (15,85) zwecks Vermischung mit dem gasförmigen Medium umgewälzt werden und sie den Durchlaufofen (15,85) in einer Zeit zwischen 3 und 10 Minuten passieren.

3. Verfahren nach Anspruch 1 oder 2, dadurch gekennzeichnet, dass die Durchlaufgeschwindigkeit der zerkleinerten Gegenstände und des gasförmigen Mediums derart gewählt und aufeinander abgestimmt sind, dass sich ein hoher, zwischen 70 und 100prozentiger Sättigungsgrad des Mediums mit verdampftem Quecksilber und damit ein optimaler Betrieb bei der Entsorgung einstellt.

4. Verfahren nach einem der Ansprüche 1 bis 3, dadurch gekennzeichnet, dass das gasförmige Medium nach dem Kondensator (20) durch einen Aktivkohlenfilter (25) und in geschlossenem Kreislauf wieder zurück in die Brechvorrichtung (10) geleitet wird.

5. Verfahren nach einem der vorhergehenden Ansprüche, dadurch gekennzeichnet, dass die zerkleinerten Gegenstände nach dem Durchlaufofen (15) durch eine Schleuse (26) befördert werden, mittels der sie von dem gasförmigen Medium und dem dampfförmigen Quecksilber getrennt werden, woduch letztere vollumfänglich in den Kondensator geführt werden und das geschlossene System wenigstens bis zu dieser Schleuse (26) gewährleistet ist.

6. Verfahren nach einem der vorhergehenden Ansprüche, dadurch gekennzeichnet, dass die zerkleinerten Gegenstände nach dem Durchlaufofen (15) durch eine Zentrifuge (28) hindurch befördert werden, in welcher Blei und gegebenenfalls weitere metallische Bestandteile ausgesondert werden.

7. Verfahren nach einem der vorhergehenden Ansprüche, dadurch gekennzeichnet, dass die zerkleinerten Gegenstände nach dem Durchlaufofen (15) oder nach der Zentrifuge (28) durch einen Windsichter (30), aus welchem der pulverförmige Leuchtstoff entfernt wird, und nachfolgend zu einem Aluminium- sowie einem Magnetabscheider (35,37) weiterbefördert werden, mittels welchem das Glas vom Aluminium und auch von Eisenlegierungen sowie Messing getrennt wird.

8. Verfahren nach Anspruch 7, dadurch gekennzeichnet, dass der vom Windsichter (30) abgetrennte Staub in einen Zyklon (31) geführt wird, in dem der Leuchtstoff vom übrigen Staub getrennt wird.

9. Verfahren nach einem der vorhergehenden Ansprüche, dadurch gekennzeichnet, dass als gasförmiges Medium Luft verwendet wird und der Druck innerhalb des Durchlaufofens (15) annähernd dem Atmosphärendruck entspricht.

10. Verfahren nach einem der vorhergehenden Ansprüche, dadurch gekennzeichnet, dass die Quecksilberkonzentration im gasförmigen Medium vor und nach der Kondensierung sowie der Filtrierung gemessen und zu Überwachungszwecken genutzt wird.

11. Verfahren nach einem der Ansprüche 1 bis 3, dadurch gekennzeichnet, dass das mit Quecksilber vermischte Pulver nach dem Zerkleinern der Gegenstände vom übrigen zerstückelten Material getrennt wird und zusammen mit den quecksilberhaltigen Dämpfen in den Durchlaufofen (85) und nach Verdampfen des gesamten Quecksilbers in ein Destilliergerät (81) zwecks Kondensierung desselben befördert wird.

12. Verfahren nach Anspruch 11, dadurch gekennzeichnet, dass das mit Quecksilber vermischte Pulver in einem Silo (75) gesammelt und von diesem aus chargenweise in den Durchlaufofen (85) befördert wird.

13. Verfahren nach Anspruch 11, dadurch gekennzeichnet, dass das mit Quecksilber vermischte Pulver mittels einer drehenden Trommel (70) oder dergleichen von den in letztere eingefüllten zerkleinerten Gegenstände getrennt und hernach von dieser Trommel (70) abgesogen wird.

14. Verfahren nach Anspruch 13, dadurch gekennzeichnet, dass die zerkleinerten Gegenstände in ein Reinigungsgefäss (71) geführt werden, und darin mittels Bürsten (71') das Pulver von den festen zerkleinerten Gegenständen getrennt wird.

15. Verfahren nach Anspruch 13, dadurch gekennzeichnet, dass die zerkleinerten und vom Quecksilber getrennten Gegenstände in ihre einzelnen Bestandteile, wie Eisen, Aluminium, Plastik, Glas und weiterem zerlegt wird.

16. Anlage insbesondere zur Durchführung des Verfahrens nach Anspruch 1, dadurch gekennzeichnet, dass sie zur Entsorgung von Gegenständen ein geschlossenes System bildet, in welchem eine die Gegenstände zerkleinernde Brechvorrichtung (10) sowie ein mit dieser verbundener Durchlaufofen (15) enthalten ist, mit welchem die zerkleinerten Gegenstände aufgeheizt und weitergefördert werden, und dass in diesem geschlossenen System ein gasförmiges Medium enthalten ist, welches die im Durchlaufofen (15) entstellenden Quecksilberdämpfe aufnimmt und in einen Kondensator (20) zur Abscheidung des Quecksilbers führt.

17. Anlage nach Anspruch 16, dadurch gekennzeichnet, dass der Durchlaufofen eine Trommel (16) aufweist, mit welcher das Entsorgungsgut darin umgewälzt wird und damit ein quasi kontinuierlicher Betrieb der Anlage ermöglicht ist.

18. Anlage nach Anspruch 16, dadurch gekennzeichnet, dass nach dem Durchlaufofen (15) eine Schleuse (26), eine Zentrifuge (28) zum Ausscheiden von Blei und Zink, ein Windsichter (30) und ein Zyklon (31) zur Separierung des Leuchtstoffes, sowie ein Aluminium- und Magnetabscheider (35,37) vorgesehen ist.

19. Anlage zur Durchführung des Verfahrens nach Anspruch 1, dadurch gekennzeichnet, dass eine Zerkleinerungseinrichtung der Gegenstände, eine Trennung des Pulvers von den übrigen zerkleinerten Gegenständen, eine Einrichtung (80) zum Absondern des Quecksilbers und eine Einrichtung 100 für die Separierung der zerkleinerten Gegenstände in ihre Einzelteile, wie Glas, Eisen, Aluminium, Plastik Papier oder anderem vorgesehen ist.

20. Vorrichtung zum Zerkleinern von quecksilberhaltigen Gegenständen, vorzugsweise für die Anlage nach Anspruch 16, dadurch gekennzeichnet, dass die Brechvorrichtung (10) ein verschliessbares Gehäuse (40) aufweist, darin wenigstens eine mittels einem Linearantrieb höhenverstellbare Brechbacke (42) geführt ist, die sich annähernd über den Innenquerschnitt dieses Gehäuses (40) erstreckt und darin von der Ober- bis zur Unterseite bewegbar ist, und das Gehäuse (40) an dessen Unterseite (47) ein Gitter (48) aufweist, durch welches die zerbrochenen Gegenstände hindurch in einen Trichter (49) fallen.

21. Vorrichtung zur Ausscheidung von Quecksilber aus einem gasförmigen Medium, vorzugsweise für die Anlage nach Anspruch 16, dadurch gekennzeichnet, dass ein Metallfilter (22) vorgesehen ist, welcher zumindest teilweise mit Gold beschichteten Längselementen, insbesondere Eisenschwamm oder Stahlwolle, gefüllt ist, durch welche das gasförmige Medium sowie allfällige Quecksilberdämpfe hindurchgeführt werden und sich das Quecksilber dabei abscheidet und von diesem Metallfilter (22) aufgefangen wird.

22. Vorrichtung zur Ausscheidung von metallischen Partikeln aus zerkleinerten Gegenständen, vorzugsweise für die Anlage nach einem der Ansprüche 11 bis 13, dadurch gekennzeichnet, dass eine Zentrifuge (28) vorgesehen ist, mittels welcher durch die Zentrifugalkraft Metalle mit einer höheren Dichte als Glas und Aluminium, insbesondere Schwermetalle, wie Blei, Zinn und/oder Zink von den zerkleinerten Gegenständen getrennt werden.
